# FASCICULE DE BREVET EUROPEEN

(11) **EP 1 461 221 B1**
(45) Date de publication et mention de la délivrance du brevet: **27.01.2010**
(21) Numéro de dépôt: 02799129.8
(22) Date de dépôt: 31.12.2002
(51) Int. Cl.: B60J 7/20

(54) **DISPOSITIF D OUVERTURE ET DE FERMETURE DU CAPOT DU COFFRE AR RIERE D UN VEHICULE DECOUVRABLE A TOIT REPLIABLE**
ÖFFNUNGS- UND VERSCHLUSSVORRICHTUNG FÜR EINE KOFFERRRAUMKLAPPE EINES CABRIOLET-FAHRZEUGES MIT EINEM FALTDACH
DEVICE FOR OPENING AND CLOSING THE HOOD OF A FOLDING-TOP CONVERTIBLE MOTOR VEHICLE TRUNK

(30) Priorité: 04.01.2002 FR 0200102
(43) Date de publication de la demande: 29.09.2004
(73) Titulaire: Société Européenne de Brevets Automobiles, 75011 Paris 11 (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2002/004590
(87) Numéro de publication internationale: WO 2003/059671

(56) Documents cités:
- US-A- 5 823 606
- US-A- 6 092 335
- US-B1- 6 186 577

## Description

La présente invention concerne un dispositif d'ouverture et de fermeture du capot du coffre arrière d'un véhicule découvrable à toit repliable.

On connaît, par exemple d'après la demande de brevet français FR-A-2 777241 au nom de la demanderesse, un dispositif du type précité qui comporte des moyens adaptés à commander l'ouverture du capot de l'arrière vers l'avant pour le rangement de bagages dans le coffre et l'ouverture dudit capot de l'avant vers l'arrière pour le passage et le rangement du toit replié dans le coffre.

Cette ouverture est commandée par au moins un vérin principal dont la base est montée de façon articulée sur une partie de la carrosserie adjacente au fond du coffre, et dont l'extrémité libre de la tige est solidaire dudit capot.

Il arrive toutefois que certains utilisateurs d'un tel dispositif souhaitent avoir la possibilité d'ouvrir ou de fermer manuellement le capot du coffre arrière de leur véhicule, par exemple pour pouvoir commander une telle opération sans avoir à pénétrer à l'intérieur dudit véhicule.

Le but de la présente invention est de remédier aux inconvénients des dispositifs connus, et de proposer un dispositif du type précité permettant d'effectuer manuellement l'ouverture et la fermeture du capot du coffre arrière d'un véhicule découvrable.

Suivant la présente invention, le dispositif du type précité est caractérisé en ce qu'il comporte en outre pour chaque vérin principal un vérin d'équilibrage adapté à faciliter une ouverture manuelle du capot de l'arrière vers l'avant pour le rangement de bagages dans le coffre, et une fermeture manuelle dudit coffre dans le sens inverse, ce vérin d'équilibrage ayant sa base reliée au vérin principal et l'extrémité libre de sa tige fixée de façon articulée au capot et étant agencé de manière à ne pas gêner le fonctionnement du vérin principal pour l'ouverture ou la fermeture automatique du capot, le dispositif comprenant en outre des moyens pour rendre inactif le vérin d'équilibrage de manière à autoriser l'ouverture ou la fermeture automatique du capot, et des moyens pour rendre actif le vérin d'équilibrage de manière à autoriser l'ouverture ou la fermeture manuelle du capot.

Le dispositif permet ainsi les deux modes de fonctionnement, automatique et manuel, des opérations d'ouverture et de fermeture du capot.

Suivant un mode de réalisation avantageux de l'invention, le dispositif comporte un organe intermédiaire sensiblement en forme de S dont l'extrémité inférieure est fixée de façon articulée à la base du vérin d'équilibrage et dont l'extrémité supérieure est fixée de façon articulée à l'extrémité libre de la tige du vérin principal.

Suivant un mode de réalisation préféré de l'invention, le dispositif comporte en outre des moyens de blocage pour fixer de façon détachable l'extrémité supérieure de l'organe intermédiaire au capot et des moyens pour déplacer lesdits moyens de blocage afin de libérer l'extrémité supérieure de l'organe intermédiaire par rapport au capot.

Ainsi, lorsque l'extrémité supérieure de l'organe intermédiaire est fixée au capot, le vérin principal peut assurer l'ouverture ou la fermeture automatique du capot.

Au contraire, lorsque l'extrémité supérieure de l'organe intermédiaire est désolidarisée du capot, on peut procéder à une ouverture ou à une fermeture manuelle du capot avec l'assistance du vérin d'équilibrage.

D'autres particularités et avantages de la présente invention apparaîtront dans la description détaillée ci-après.

Aux dessins annexés, donnés uniquement à titre d'exemples non limitatifs :
- la figure 1 est une vue schématique en coupe longitudinale d'un véhicule illustrant un dispositif selon l'art antérieur ;
- la figure 2 est une vue semblable à la figure 1 illustrant un mode de réalisation du dispositif selon l'invention, le capot étant dans sa position fermée ;
- la figure 3 est une vue semblable à la figure 2, le capot étant dans sa position ouverte de l'avant vers l'arrière ;
- la figure 4 est une vue semblable à la figure 2, le capot étant dans sa position ouverte de l'arrière vers l'avant ;
- la figure 5 est une vue schématique agrandie d'un détail de la figure 2.

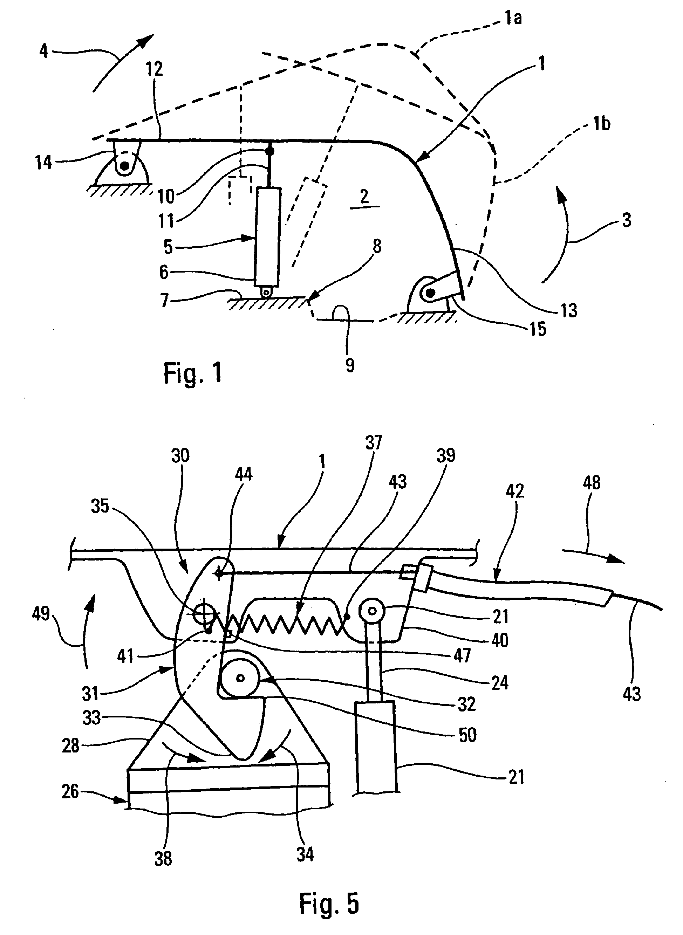

Dans le mode de réalisation représenté à la figure 1, le capot 1 du coffre arrière 2 d'un véhicule découvrable à toit repliable, non représenté, peut être ouvert de l'arrière vers l'avant, dans le sens de la flèche 3, vers la position repérée la, pour le rangement de bagages dans le coffre et plus généralement pour l'accès au coffre depuis l'arrière du véhicule. Le capot 1 peut également être ouvert de l'avant vers l'arrière, dans le sens de la flèche 4, vers la position repérée 1b, pour le passage et le rangement du toit replié dans le coffre 2.

L'ouverture du capot 1 est commandée par au moins un vérin principal 5 dont la base 6 est montée de façon articulée sur une partie 7 de la carrosserie 8 adjacente au fond 9 du coffre 2.

En général, on installe un vérin principal 5 de chaque côté du coffre 2 le long d'une paroi latérale correspondante du coffre 2.

L'extrémité libre 10 de la tige 11 du vérin 5 est solidaire du capot 1.

Le bord avant 12 et le bord arrière 13 du capot 1 sont reliés à la carrosserie 8 du véhicule au moyen de verrous respectifs avant 14 et arrière 15 ayant chacun pour fonction le verrouillage et l'articulation du capot 1 pour que ledit capot 1 puisse s'ouvrir soit de l'avant vers l'arrière (flèche 4), soit de l'arrière vers l'avant (flèche 3).

Pour la description détaillée d'un mode de réalisation du dispositif selon la présente invention, on a utilisé les mêmes numéros de référence pour les éléments de l'invention qui sont identiques aux éléments précités du dispositif de l'art antérieur.

Suivant la présente invention, le dispositif 20 comporte en outre pour chaque vérin principal 5 un vérin d'équilibrage 21 adapté à faciliter une ouverture manuelle du capot 1 de l'arrière vers l'avant, dans le sens de la flèche 3, pour le rangement de bagages dans le coffre 2, et une fermeture manuelle dudit capot 1 dans le sens inverse. Le vérin d'équilibrage 21 est un vérin d'équilibrage d'un type connu quelconque qui est autonome et ne nécessite aucune liaison à une source d'énergie quelconque.

Le vérin d'équilibrage 21 a sa base 22 reliée au vérin principal 5, et l'extrémité libre 23 de sa tige 24 fixée de façon articulée au capot 1.

Le vérin d'équilibrage 21 est agencé de manière à ne pas gêner le fonctionnement du vérin principal 5 pour l'ouverture ou la fermeture automatique du capot 1;

Le dispositif 20 comprend en outre des moyens 25 pour rendre inactif le vérin d'équilibrage 21 de manière à autoriser l'ouverture ou la fermeture automatique du capot 1, et des moyens pour rendre actif le vérin d'équilibrage 21 de manière à autoriser l'ouverture ou la fermeture manuelle du capot 1.

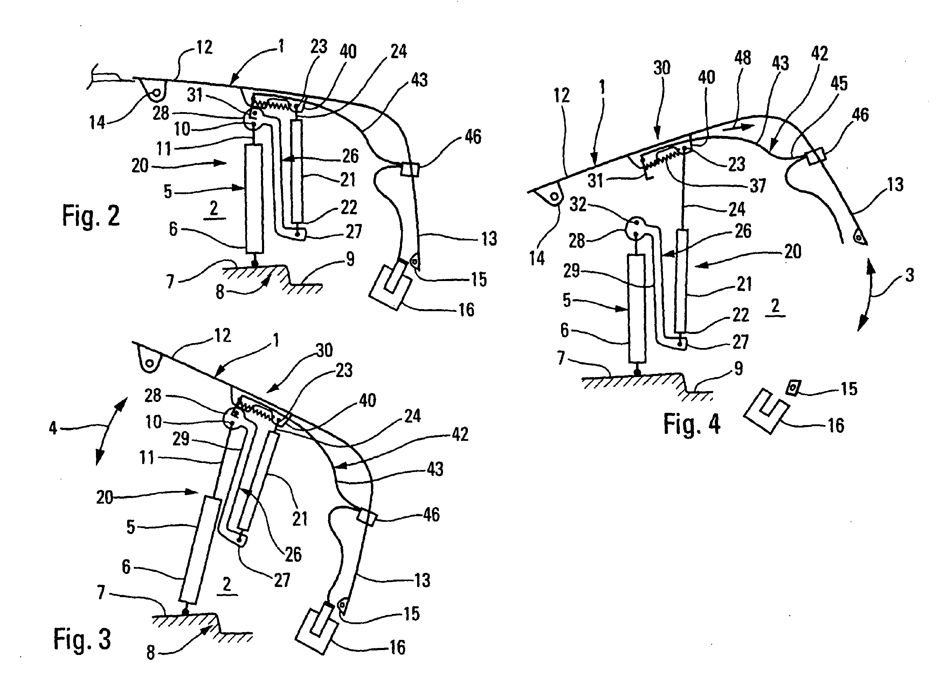

Comme représenté aux figures 2 à 4, le dispositif 21 comporte un organe intermédiaire 26 sensiblement en forme de S dont l'extrémité inférieure 27 est fixée de façon articulée à la base 22 du vérin d'équilibrage 21, et dont l'extrémité supérieure 28 est fixée de façon articulée à l'extrémité libre 10 de la tige 11 du vérin principal 5.

Dans le mode de réalisation représenté, l'organe intermédiaire 26 comporte un corps principal 29 s'étendant sensiblement parallèlement au vérin principal 5 et au vérin d'équilibrage 21 lorsque le capot 1 est dans sa position fermée représentée à la figure 2.

L'extrémité inférieure 27 de l'organe 26 est constituée par un prolongement transversal du corps 29 s'étendant sous le vérin d'équilibrage 21.

L'extrémité supérieure 28 de l'organe intermédiaire 26 est constituée par un prolongement transversal du corps 29 s'étendant au-dessus du vérin principal 5.

Le dispositif 20 comporte des moyens de blocage 30 pour fixer de façon détachable l'extrémité supérieure 28 de l'organe intermédiaire 26 au capot 1, et des moyens pour déplacer lesdits moyens de blocage 30 afin de libérer l'extrémité supérieure 28 de l'organe intermédiaire 26 par rapport au capot 1.

Dans l'exemple de la figure 5, le capot 1 porte un crochet 31 monté de manière pivotante sur le capot 1. L'extrémité supérieure 28 de l'organe intermédiaire 26 porte une gâche 32, le crochet 31 étant adapté à venir en prise avec la gâche 32 pour fixer l'extrémité supérieure 28 de l'organe intermédiaire 26 au capot 1.

Dans cet exemple, la partie inférieure 33 du crochet 31 est conformée de manière à être repoussée par la gâche 32 lors de la fermeture du capot 1, schématisée par la flèche 34, et le crochet 31 est adapté à venir en prise automatiquement avec la gâche 32 lorsque le capot 1 est fermé.

Dans cet exemple, le crochet 31 est monté pivotant autour d'un premier axe 35 par rapport au capot 1, et la gâche 32 est un second axe 32 sensiblement parallèle au premier axe 35.

Un ressort 37 est agencé pour solliciter en permanence le crochet 31 dans le sens de fermeture du crochet 31, ce sens étant schématisé par la flèche 38.

Le ressort 37 est ici un ressort de traction fixé à une première extrémité 39 à une platine 40 solidaire du capot 1 et à son autre extrémité 41 au crochet 31.

Le capot 1 comporte en outre des moyens 42 pour faire pivoter le crochet 31 afin de le dégager de sa position en prise avec la gâche 32 représentée à la figure 5.

Le capot 1 comporte ici un câble 43 dont une extrémité 44 est fixée au crochet 31 et dont l'autre extrémité 45 est fixée à un élément de commande, schématisé en 46, porté par le capot 1, qui est, par exemple, un bouton poussoir ou un levier, d'un type connu quelconque, porté par le capot 1, et qui peut commander en même temps une serrure, schématisée en 16, d'un type connu quelconque.

Dans l'exemple de la figure 5, le premier axe 35 de pivotement du crochet 31 est porté par la platine 40, et l'extrémité 44 du câble 43 est située sur le crochet 31 à l'opposé de l'extrémité 41 du ressort 37 par rapport à l'axe 35.

La platine 40 porte en outre une butée 47 contre laquelle le crochet 31 est plaqué en permanence par la traction exercée par le ressort 37.

Dans cet exemple, une traction exercée sur le câble 43 dans le sens de la flèche 48, vers la droite de la figure, fait pivoter le crochet 31 dans le sens de la flèche 49, le sens horaire à la figure, pour libérer le crochet 31 de sa position en prise avec la gâche 32.

Cette opération supprime toute liaison entre la platine 40 et le capot 1, d'une part, et l'extrémité supérieure 28 de l'organe intermédiaire 26, d'autre part.

Dans ces conditions, et le vérin principal 5 n'étant pas activé, un effort vers le haut, dans le sens de la flèche 3, exercé sur le bord arrière 13 du capot 1 permet d'ouvrir le capot 1 jusqu'à sa position ouverte la pour avoir accès au coffre 2, cette manoeuvre d'ouverture et le maintien du capot 1 dans sa position ouverte étant facilités par le vérin d'équilibrage 21.

Au contraire, une poussée vers le bas exercée sur le bord arrière 13 du capot 1 fait pivoter le capot 1 dans le sens de la flèche 4 jusqu'à sa position fermée de la figure 2 avec l'assistance du vérin d'équilibrage 21.

Dans ces deux manoeuvres, l'utilisateur peut ainsi procéder comme il le ferait avec un capot de coffre à ouverture ou fermeture manuelle, avec les mêmes habitudes et les mêmes réflexes d'attention et de prudence.

A la fin de l'opération de fermeture, la partie inférieure 33 du crochet 31 vient en contact avec la gâche 32 et est conformée de manière à faire pivoter le crochet 31 dans le sens de la flèche 49 contre l'action du ressort 37 jusqu'à ce que le bec 50 du crochet 31 puisse passer sous la gâche 32.

Cette dernière opération replace la câble 43 et l'élément de commande 46 dans la position que chacun d'eux occupe lorsque le crochet 31 est dans sa position en prise avec la gâche 32 pour fixer l'extrémité supérieure 28 de l'organe intermédiaire 26 au capot 1.

Ainsi, lorsque le crochet 31 est en prise avec la gâche 32, comme schématisé à la figure 5, le vérin d'équilibrage 21 est bloqué dans sa position escamotée et le vérin 5 peut commander l'ouverture et la fermeture automatiques du capot 1 dans un sens ou dans l'autre (flèche 4 à la figure 3).

Au contraire, lorsque l'on fait pivoter le crochet 31 au moyen du câble 43 pour le dégager de sa position en prise avec la gâche 32, le vérin d'équilibrage 21 est libéré alors que le vérin principal 5 est inactif, et il est possible d'ouvrir le capot manuellement de l'arrière vers l'avant pour l'accès au coffre 2, ou de fermer manuellement le coffre, l'ouverture et la fermeture du coffre étant des opérations facilitées par le vérin d'équilibrage 21.

Bien entendu, la présente invention n'est pas limitée aux modes de réalisation que l'on vient de décrire, et on peut apporter à ceux-ci de nombreux changements et modifications sans sortir du domaine de l'invention.

On peut ainsi, par exemple, remplacer les moyens dé blocage 30 mécaniques décrits ci-dessus par des moyens hydrauliques ou électriques équivalents remplissant la même fonction pour obtenir le même résultat.

On peut également prévoir des moyens classiques de guidage et/ou d'appui entre l'organe intermédiaire 26 et, d'une part, le vérin principal 5, d'autre part le vérin d'équilibrage 21.

## Revendications

1. Dispositif (20) d'ouverture et de fermeture du capot (1) du coffre arrière (2) d'un véhicule découvrable à toit repliable, ce dispositif (20) comportant des moyens adaptés à commander l'ouverture du capot (1) de l'arrière vers l'avant pour le rangement de bagages dans le coffre (2) et l'ouverture dudit capot (1) de l'avant vers l'arrière pour le passage et le rangement du toit replié dans le coffre (2), cette ouverture étant commandée par au moins un vérin principal (5) dont la base (6) est montée de façon articulée sur une partie (7) de la carrosserie (8) adjacente au fond (9) du coffre (2), et dont l'extrémité libre (10) de la tige (11) est solidaire dudit capot (1), **caractérisé en ce qu'**il comporte en outre un vérin d'équilibrage (21) adapté à faciliter une ouverture manuelle du capot (1) de l'arrière vers l'avant pour le rangement de bagages dans le coffre (2), et une fermeture manuelle dudit capot (1) dans le sens inverse, ce vérin d'équilibrage (21) ayant sa base (22) reliée au vérin principal (5) et l'extrémité libre (23) de sa tige (24) fixée de façon articulée au capot (1), ledit vérin d'équilibrage (21) étant agencé de manière à ne pas gêner le fonctionnement du vérin principal (5) pour l'ouverture ou la fermeture automatique du capot (1), le dispositif (20) comprenant en outre des moyens pour rendre inactif le vérin d'équilibrage (21) de manière à autoriser l'ouverture ou la fermeture automatique du capot (1), et des moyens pour rendre actif le vérin d'équilibrage (21) de manière à autoriser l'ouverture ou la fermeture manuelle du capot (1).

2. Dispositif selon la revendication 1, **caractérisé en ce qu'**il comporte un organe intermédiaire (26) sensiblement en forme de S dont l'extrémité inférieure (27) est fixée de façon articulée à la base (22) du vérin d'équilibrage (21) et dont l'extrémité supérieure (28) est fixée de façon articulée à l'extrémité libre (10) de la tige (11) du vérin principal (5).

3. Dispositif selon la revendication 2, **caractérisé en ce qu'**il comporte des moyens (30) de blocage pour fixer de façon détachable l'extrémité supérieure (27) de l'organe intermédiaire (26) au capot (1), et des moyens pour déplacer lesdits moyens (30) de blocage afin de libérer l'extrémité supérieure (28) de l'organe intermédiaire (26) par rapport au capot (1).

4. Dispositif selon la revendication 3, **caractérisé en ce que** le capot (1) porte un crochet (31) monté de manière pivotante sur le capot (1), et **en ce que** l'extrémité supérieure (28) de l'organe intermédiaire (26) porte une gâche (32), le crochet (31) étant adapté à venir en prise avec la gâche (32) pour fixer l'extrémité supérieure (28) de l'organe intermédiaire (26) au capot (1).

5. Dispositif selon la revendication 4, **caractérisé en ce que** la partie inférieure (33) du crochet (31) est conformée de manière à être repoussée par la gâche (32) lors de la fermeture du capot (1), le crochet (31) étant adapté à venir en prise automatiquement avec la gâche (32) lorsque le capot est fermé (1).

6. Dispositif selon la revendication 5, **caractérisé en ce que** le crochet (31) est monté pivotant autour d'un premier axe (35) par rapport au capot (1), et **en ce que** la gâche (32) est un second axe (36) parallèle au premier axe (35), un ressort (37) étant agencé pour solliciter en permanence le crochet (31) dans le sens (38) de fermeture du crochet (31).

7. Dispositif selon l'une quelconque des revendications 4 à 6, **caractérisé en ce que** le capot (1) comporte des moyens (42) pour faire pivoter le crochet (31) afin de le dégager de sa position en prise avec la gâche (32).

8. Dispositif selon l'une quelconque des revendications 4 à 6, **caractérisé en ce que** le capot (1) comporte un câble (43) dont une extrémité (44) est fixée au crochet (31) et dont l'autre extrémité (45) est fixée à un élément de commande (46) porté par le capot (1).

9. Dispositif selon l'une quelconque des revendications précédentes, **caractérisé en ce que** le bord avant (12) et le bord arrière (13) du capot (1) sont reliés à la carrosserie (8) du véhicule au moyen de verrous avant (14) et arrière (15) ayant chacun pour fonction le verrouillage et l'articulation du capot (1) pour que ledit capot (1) puisse s'ouvrir soit de l'avant vers l'arrière, soit de l'arrière vers l'avant.

## Claims

1. Device (20) for opening and closing the hood (1) of a folding-top convertible motor vehicle trunk (2), said device (20) comprising means designed to control the opening of the hood (1) from the back to the front for storing luggage in the trunk (2) and the opening of said hood (1) from the front to the back for the passage and storing of the folded roof in the trunk (2), said opening being controlled by at least one main jack (5), the base (6) of which is mounted in an articulated manner onto a part (7) of the body (8) adjacent to the base (9) of the trunk (2), and the free end (10) of its rod (11) is joined to said hood (1), **characterised in that** it also comprises a balancing jack (21) adapted to facilitate the manual opening of the hood (1) from the back to the front for storing luggage in the trunk (2), and the manual closing of said hood (1) in reverse direction, said balancing jack (21) having its base (22) connected to the main jack (5) and the free end (23) of its rod (24) fixed in an articulated manner to the hood (1), said balancing jack (21) being arranged so as not to hinder the functioning of the main jack (5) for the automatic opening or closing of the hood (1), the device (20) also comprising means for deactivating the balancing jack (21) so as to authorise the automatic opening or closing of the hood (1), and means for activating the balancing jack (21) so as to authorise the manual opening or closing of the hood (1).

2. Device according to claim 1, **characterised in that** it comprises an intermediate element (26) substantially in the form of an S, the lower end (27) of which is fixed in an articulated fashion to the base (22) of the balancing jack (21) and the upper end (28) of which is fixed in an articulated manner to the free end (10) of the rod (11) of the main jack (5).

3. Device according to claim 2, **characterised in that** it comprises locking means (30) for securing in a detachable manner the upper end (27) of the intermediate element (26) to the hood (1), and means for displacing said locking means (30) in order to release the upper end (28) of the intermediate element (26) in relation to the hood (1).

4. Device according to claim 3, **characterised in that** the hood (1) comprises a hook (31) mounted in a pivoting manner on the hood (1), and **in that** the upper end (28) of the intermediate element (26) bears a catch (32), the hook (31) being designed to connect with the catch (32) to secure the upper end (28) of the intermediate element (26) to the hood (1).

5. Device according to claim 4, **characterised in that** the lower part (33) of the hook (31) is shaped in such a way so as to be repelled by the catch (32) at the time of closing the hood (1), the hook (31) being designed to connect automatically with the catch (32) when the hood (1) is closed.

6. Device according to claim 5, **characterised in that** the hook (31) is mounted pivotably around a first axis (35) in relation to the hood (1), and **in that** the catch (32) is a second axis (36) parallel to the first axis (35), a spring (37) being arranged to act permanently on the hook (31) in the direction (38) of closure of the hook (31).

7. Device according to any one of claims 4 to 6, **characterised in that** the hood (1) comprises means (42) for pivoting the hook (31) in order to disengage it from its connected position with the catch (32).

8. Device according to any one of claims 4 to 6, **characterised in that** the hood (1) comprises a cable (43), one end (44) of which is secured to the hook (31) and the other end (45) of which is secured to a control element (46) supported by the hood (1).

9. Device according to any one of the preceding claims, **characterised in that** the front edge (12) and the rear edge (13) of the hood (1) are connected to the body (8) of the vehicle by means of front (14) and rear (15) bolts, each having the function of bolting and articulating the hood (1) so that said hood (1) can open either from front to back or from back to front.

## Patentansprüche

1. Öffnungs- und Verschlussvorrichtung (20) für die Kofferraumklappe (1) eines Cabrioletfahrzeuges mit einem Faltdach, umfassend Einrichtungen zum Veranlassen des Öffnens der Klappe (1) von hinten nach vorne zum Einräumen von Gepäck in den Kofferraum (2) und des Öffnens der Klappe (1) von vorne nach hinten für den Durchgang zum und zum Einräumen des gefalteten Daches in den Kofferraum (2), wobei das Öffnen durch mindestens einen Hauptzylinder (5) veranlasst ist, dessen Basis (6) schwenkbar an einem am Boden (9) des Kofferraums (2) angrenzenden Abschnitt (7) der Karosserie (8) angebracht ist und (10) dessen Stange (11) freies Ende (10) an der Klappe (1) befestigt ist, **dadurch gekennzeichnet, dass** die Vorrichtung unter anderem einen Ausgleichszylinder (21) umfasst zum Ermöglichen eines manuellen Öffnens der Klappe (1) von hinten nach vorne zum Einräumen von Gepäck in den Kofferraum (2) sowie ein manuelles Schließen der Klappe (1) in umgekehrter Richtung, wobei die Basis (22) dieses Ausgleichszylinders (21) mit dem Hauptzylinder (5) mechanisch verbunden ist und das freie Ende (23) seiner Stange (24) schwenkbar an der Klappe (1) befestigt ist und der Ausgleichszylinder (21) so angeordnet ist, dass er nicht die Funktion des Hauptzylinders (5) zum automatischen Öffnen oder Schließen der Klappe behindert, wobei die Vorrichtung (20) unter anderem Einrichtungen zum Deaktivieren des Ausgleichszylinders (21) umfasst, um das automatische Öffnen oder Schließen der Klappe (1) zu gestatten, und Einrichtungen zum Aktivieren des Ausgleichszylinders (21), um das manuelle Öffnen oder Schließen der Klappe (1) zu gestatten.

2. Vorrichtung nach Anspruch 1, **dadurch gekennzeichnet, dass** sie ein im Wesentlichen S-förmiges Zwischenbauteil (26) umfasst, dessen unteres Ende (27) an der Basis (22) des Ausgleichszylinders (21) schwenkbar befestigt ist und dessen oberes Ende (28) schwenkbar am freien Ende (10) der Stange (11) des Hauptzylinders (5) befestigt ist.

3. Vorrichtung nach Anspruch 2, **dadurch gekennzeichnet, dass** sie Blockiereinrichtungen (30) umfasst zum lösbaren Befestigen des oberen Endes (27) des Zwischenbauteils (26) an der Klappe (1) sowie Einrichtungen zum Verlagern der Blockiereinrichtungen (30), um das obere Ende (28) des Zwischenbauteils (26) freizusetzen in Bezug auf die Klappe (1).

4. Vorrichtung nach Anspruch 3, **dadurch gekennzeichnet, dass** die Klappe (1) einen Haken (31) hält, der schwenkbar an der Klappe (1) angebracht ist, sowie **dadurch**, dass das obere Ende (28) des Zwischenbauteils (26) eine Zarge (32) hält, wobei der Haken (31) zum in Eingriff kommen mit der Zarge (32) ausgeführt ist für das Befestigen des oberen Endes (28) des Zwischenbauteils (26) an der Klappe (1).

5. Vorrichtung nach Anspruch 4, **dadurch gekennzeichnet, dass** der untere Abschnitt (33) des Hakens (31) so angepasst ist, dass er bei Schließung der Klappe (1) durch die Zarge (32) zurück geschoben wird und der Haken (31) so ausgeführt ist, dass er automatisch mit der Zarge (32) in Eingriff kommt, wenn die Klappe (1) geschlossen ist.

6. Vorrichtung nach Anspruch 5, **dadurch gekennzeichnet, dass** der Haken (31) um eine erste Achse (35) schwenkbar angebracht ist in Bezug auf die Klappe (1), sowie **dadurch**, dass die Zarge (32) eine zur ersten Achse (35) parallele zweite Achse (36) ist, wobei eine Feder (37) so angeordnet ist, dass sie den Haken (31) ständig in Schließrichtung (38) des Hakens (31) vorspannt.

7. Vorrichtung nach einem der Ansprüche 4 bis 6, **dadurch gekennzeichnet, dass** die Klappe (1) Einrichtungen (42) zum Schwenken des Hakens (31) umfasst für das Lösen des Hakens aus seiner Position des Eingriffs mit der Zarge (32).

8. Vorrichtung nach einem der Ansprüche 4 bis 6, **dadurch gekennzeichnet, dass** die Klappe (1) ein Kabel (43) umfasst, dessen eines Ende (44) am Haken (31) befestigt ist und dessen anderes Ende (45) an einem von der Klappe (1) gehaltenen Betätigungselement (46) befestigt ist.

9. Vorrichtung nach einem der vorstehenden Ansprüche, **dadurch gekennzeichnet, dass** die Vorderkante (12) und die Hinterkante (13) der Klappe (1) mit der Karosserie (8) des Fahrzeuges mechanisch verbunden sind über eine vordere (14) und eine hintere Verriegelung (15), von denen jede die Funktion des Blockierens und schwenkbar Lagerns der Klappe (1) hat zum Ermöglichen des Öffnens der Klappe (1) von vorne nach hinten sowie von hinten nach vorne.
